# EUROPEAN PATENT APPLICATION

(11) **EP 4 270 867 A1**
(43) Date of publication of application: **01.11.2023**
(21) Application number: 21927728.2
(22) Date of filing: 30.12.2021
(51) Int. Cl.: H04L 9/40

(54) **SECURE COMMUNICATION METHOD, APPARATUS, AND SYSTEM FOR DC INTERCONNECTION**

(30) Priority: 26.02.2021 CN 202110221098
(71) Applicant: Huawei Technologies Co., Ltd., Shenzhen, Guangdong 518129 (CN)
(72) Inventor: HUANG, Songxun, Shenzhen, Guangdong 518129 (CN)
(74) Representative: Gill Jennings & Every LLP
(86) International application number: PCT/CN2021/143418
(87) International publication number: WO 2022/179304

(57) **Abstract**

This application provides a secure communication method, apparatus, and system for data center (data center, DC) interconnection, and relates to the network security field. The method includes: A first device in a first DC receives a first packet sent by a second device in a second DC, where the first packet carries attack verification information, and the attack verification information includes at least one of a first timestamp and a first random number. The first device performs replay attack verification on the first packet based on the attack verification information. In this application, replay protection is performed on a de vice in a DC by including a timestamp and/or a random number in a packet exchanged between devices in different DCs. This is applicable to point-to-point, point-to-multipoint, and multipoint-to-point communication scenarios. The secure communication method is applicable to various scenarios and has high flexibility.

## Description

This application claims priority to Chinese Patent Application No. 202110221098.3, filed on February 26, 2021 and entitled "SECURE COMMUNICATION METHOD, APPARATUS, AND SYSTEM FOR DC INTERCONNECTION", which is incorporated herein by reference in its entirety.

### TECHNICAL FIELD

This application relates to the network security field, and in particular, to a secure communication method, apparatus, and system for DC interconnection.

### BACKGROUND

Currently, to ensure service reliability and continuity, an enterprise usually deploys DCs that carry a same service at a plurality of sites and interconnects the DCs at the plurality of sites. When a specific DC is faulty, another DC that carries the same service is used to ensure normal service running. Devices in different DCs usually communicate with each other based on a media access control security (media access control security, MACsec) technology to ensure communication security. For example, a device outside the DC is prevented from performing replay attack on a device in the DC.

In an anti-replay-attack solution based on the MACsec technology, a packet number (packet number, PN) is carried in a packet, to perform replay protection on a device. For example, a first device in a first DC sends a packet to a second device in a second DC. After establishing a neighbor relationship between the first device and the second device, the first device performs PN synchronization, so that the first device and the second device record a same PN. Then, each time the first device sends a packet to the second device, the first device updates the PN recorded by the first device, where an updated PN is equal to a pre-updated PN plus 1, and the packet sent by the first device to the second device carries the updated PN of the first device. Each time the second device receives a packet, the second device determines whether a PN carried in the packet is consecutive with the PN recorded by the second device (for example, whether the PN carried in the packet is equal to the PN recorded by the second device plus 1). If the PN carried in the packet is consecutive with the PN recorded by the second device, the second device determines that the packet is not a packet that is used to perform replay attack on the second device, and the second device updates, by using the PN carried in the packet, the PN recorded by the second device. If the PN carried in the packet is inconsecutive with the PN recorded by the second device, the second device determines that the packet is a packet that is used to perform replay attack on the second device, and the second device discards the packet.

However, in the anti-replay-attack solution based on the MACsec technology, PNs recorded by two devices that communicate with each other need to be synchronized, and a PN that is carried in a packet communicated between the two devices need to be consecutive with each of the PNs recorded by the two devices. Therefore, the anti-replay-attack solution based on the MACsec technology is applicable only to a point-to-point communication scenario, and is difficult to be applicable to point-to-multipoint and multipoint-to-point communication scenarios. Therefore, an application scenario of the foregoing anti-replay-attack solution is limited, and flexibility is poor.

### SUMMARY

This application provides a secure communication method, apparatus, and system for DC interconnection. The technical solutions of this application are as follows:

According to a first aspect, a secure communication method for DC interconnection is provided. The method includes: A first device in a first DC receives a first packet sent by a second device in a second DC, where the first packet carries attack verification information, and the attack verification information includes at least one of a first timestamp and a first random number; and the first device performs replay attack verification on the first packet based on the attack verification information. The first timestamp is a timestamp at which the second device sends the first packet.

According to the secure communication solution for DC interconnection provided in this application, replay protection is performed on a device in a DC by including a timestamp and/or a random number in a packet exchanged between devices in different DCs. This is applicable to point-to-point, point-to-multipoint, and multipoint-to-point communication scenarios. The secure communication solution is applicable to various scenarios and has high flexibility.

Optionally, the method further includes: When a first condition is met, the first device determines that the first packet passes the replay attack verification. When the first condition is not met, the first device determines that the first packet fails to pass the replay attack verification.

According to the secure communication solution for DC interconnection provided in this application, when the first device determines that the first packet passes the replay attack verification, the first device determines that the first packet is not a replay attack packet (that is, the first packet is not a packet used to perform replay attack on the first device), and the first device may process the first packet. When the first device determines that the first packet fails to pass the replay attack verification, the first device determines that the first packet is a replay attack packet (that is, the first packet is a packet used to perform replay attack on the first device), and the first device discards the first packet without processing the first packet. Therefore, performance consumption of the first device caused by processing the replay attack packet by the first device can be avoided.

Optionally, the attack verification information includes the first timestamp, and the first condition includes that a time difference between a second timestamp and the first timestamp is less than or equal to a first threshold. The first timestamp is a timestamp at which the second device sends the first packet, and the second timestamp is a timestamp at which the first device receives the first packet.

According to the secure communication solution for DC interconnection provided in this application, when the attack verification information carried in the first packet includes the first timestamp, the first condition includes that the time difference between the second timestamp and the first timestamp is less than or equal to the first threshold. In this way, the first device may perform replay attack verification on the first packet depending on whether the time difference between the second timestamp and the first timestamp is less than or equal to the first threshold.

Optionally, the attack verification information includes the first random number, and the first condition includes that the first random number and a first random number list meet a matching rule.

According to the secure communication solution for DC interconnection provided in this application, when the attack verification information carried in the first packet includes the first random number, the first condition includes that the first random number and the first random number list meet the matching rule. In this way, the first device may perform replay attack verification on the first packet depending on whether the first random number and the first random number list meet the matching rule.

Optionally, the matching rule includes that the first random number is in the first random number list (for example, a random number list A).

Optionally, when the matching rule includes that the first random number is in the first random number list, the attack verification information further includes list indication information of the first random number list, and the list indication information is used to determine the first random number list. For example, the list indication information of the first random number list is an identifier of the first random number list. Alternatively, the first random number list corresponds to the first DC, and the list indication information of the first random number list is indication information of the first DC, for example, an identifier of the first DC.

Optionally, when the matching rule includes that the first random number is in the first random number list, the method further includes:
The first device obtains the first random number list from a control device. For example, before performing replay attack verification on the first packet based on the attack verification information, the first device obtains the first random number list and the list indication information of the first random number list from the control device.

According to the secure communication solution for DC interconnection provided in this application, the first device obtains the first random number list from the control device, so that when the attack verification information carried in the first packet includes the first random number, the first device determines whether the first random number is in the first random number list, to implement the replay attack verification on the first packet.

Optionally, the matching rule includes that the first random number is not in the first random number list (for example, a random number list B). For example, the first random number list is constructed by the first device based on a random number carried in a received packet.

Optionally, when the matching rule includes that the first random number is not in the first random number list, the method further includes:
When the first packet is not a replay attack packet, the first device records the first random number in the first random number list.

According to the secure communication solution for DC interconnection provided in this application, when the attack verification information carried in the first packet includes the first random number, and the matching rule includes that the first random number is not in the first random number list, and when the first device determines that the first packet is not the replay attack packet, the first device records the first random number carried in the first packet in the first random number list. In this way, when subsequently receiving a packet carrying the first random number, the first device may determine the packet carrying the first random number as the replay attack packet.

Optionally, the first packet includes a security header, and the attack verification information is located in the security header.

Optionally, the security header is a service security header.

Optionally, the first packet further includes a user datagram protocol (user datagram protocol, UDP) header, and a destination port number in the UDP header indicates the service security header.

Optionally, the first device and a third device in the first DC form a multi-chassis link aggregation group (multi-chassis link aggregation group, MLAG).

Optionally, the second device and a fourth device in the second DC form an MLAG.

According to a second aspect, a secure communication method for DC interconnection is provided. The method includes: A second device in a second DC sends a first packet to a first device in a first DC, where the first packet carries attack verification information, and the attack verification information includes at least one of a first timestamp and a first random number; and the attack verification information is used by the first device to perform replay attack verification on the first packet. The first timestamp is a timestamp at which the second device sends the first packet.

According to the secure communication solution for DC interconnection provided in this application, replay protection is performed on a device in a DC by including a timestamp and/or a random number in a packet exchanged between devices in different DCs. This is applicable to point-to-point, point-to-multipoint, and multipoint-to-point communication scenarios. The secure communication solution is applicable to various scenarios and has high flexibility.

Optionally, the attack verification information includes the first random number, and the first random number is included in a first random number list (for example, a random number list A). For example, the first random number included in the attack verification information is determined by the second device from the first random number list (for example, the random number list A).

Optionally, the attack verification information further includes list indication information of the first random number list, and the list indication information is used to determine the first random number list. For example, the list indication information of the first random number list is an identifier of the first random number list. Alternatively, the first random number list corresponds to the first DC, and the list indication information of the first random number list is indication information of the first DC, for example, an identifier of the first DC.

Optionally, the method further includes: The second device obtains the first random number list from a control device. For example, before sending the first packet to the first device, the second device obtains the first random number list and the list indication information of the first random number list from the control device.

According to the secure communication solution for DC interconnection provided in this application, the second device obtains the first random number list from the control device, so that the second device can determine the first random number from the first random number list, and include the first random number as the attack verification information in the first packet. In this way, the first device performs replay attack verification on the first packet based on the first random number carried in the first packet.

Optionally, the attack verification information includes the first random number, and the first random number is generated by the second device.

Optionally, the first packet includes a security header, and the attack verification information is located in the security header.

Optionally, the security header is a service security header.

Optionally, the first packet further includes a UDP header, and a destination port number in the UDP header indicates the service security header.

Optionally, the first device and a third device in the first DC form an MLAG.

Optionally, the second device and a fourth device in the second DC form an MLAG.

According to a third aspect, a secure communication apparatus for DC interconnection is provided. The secure communication apparatus includes modules configured to perform the method according to the first aspect or any optional manner of the first aspect.

According to a fourth aspect, a secure communication apparatus for DC interconnection is provided. The secure communication apparatus includes modules configured to perform the method according to the second aspect or any optional manner of the second aspect.

The modules in the third aspect or the fourth aspect may be implemented based on software, hardware, or a combination of software and hardware, and may be randomly combined or divided based on a specific implementation.

According to a fifth aspect, a secure communication apparatus is provided, including a memory and a processor.

The memory is configured to store a computer program.

The processor is configured to execute the computer program stored in the memory, so that the secure communication apparatus performs the method provided in the first aspect or any optional manner of the first aspect, or performs the method provided in the second aspect or any optional manner of the second aspect.

According to a sixth aspect, a computer-readable storage medium is provided. The computer-readable storage medium stores a computer program. When the computer program is executed by a processor, the method provided in the first aspect or any optional manner of the first aspect is implemented, or the method provided in the second aspect or any optional manner of the second aspect is implemented.

According to a seventh aspect, a computer program product is provided. The computer program product includes a program or code. When the program or the code is run on a processor, the method provided in the first aspect or any optional manner of the first aspect is implemented, or the method provided in the second aspect or any optional manner of the second aspect is implemented.

According to an eighth aspect, a secure communication system for DC interconnection is provided. The system includes a first device in a first DC and a second device in a second DC. The first device includes the secure communication apparatus for DC interconnection provided in the third aspect, and the second device includes the secure communication apparatus for DC interconnection provided in the fourth aspect. Alternatively, at least one of the first device and the second device includes the secure communication apparatus provided in the fifth aspect.

Optionally, the first device and a third device in the first DC form an MLAG.

Optionally, the second device and a fourth device in the second DC form an MLAG.

According to a ninth aspect, a chip is provided. The chip includes a programmable logic circuit and/or program instructions. When the chip runs, the chip is configured to implement the method according to the first aspect or any optional manner of the first aspect, or implement the method according to the second aspect or any optional manner of the second aspect.

The technical solutions provided in this application bring the following beneficial effects:
According to the secure communication method, apparatus, and system for DC interconnection provided in this application, the first packet sent by the second device in the second DC to the first device in the first DC carries the attack verification information, where the attack verification information includes at least one of the first timestamp and the first random number. After receiving the first packet, the first device performs replay attack verification on the first packet based on the attack verification information carried in the first packet. If the first packet passes the replay attack verification, the first device processes the first packet, or if the first packet fails to pass the replay attack verification, the first device discards the first packet, to implement the replay protection on the first device, and avoid performance consumption of the first device caused by processing the replay attack packet by the first device. According to the technical solution provided in this application, the replay protection is performed on the device in the DC by including the timestamp and/or the random number in the packet exchanged between the devices in the different DCs. This is applicable to point-to-point, point-to-multipoint, and multipoint-to-point communication scenarios. This helps extend the application scenario of the secure communication solution, and improves flexibility of the secure communication solution.

### BRIEF DESCRIPTION OF DRAWINGS

FIG. 1 is a schematic diagram of a DCI network according to an embodiment of this application;
FIG. 2 is a flowchart of a secure communication method for DC interconnection according to an embodiment of this application;
FIG. 3 is a schematic diagram of a first packet according to an embodiment of this application;
FIG. 4 is a schematic diagram of another first packet according to an embodiment of this application;
FIG. 5 is a schematic diagram of a MACsec packet according to an embodiment of this application;
FIG. 6 is a schematic diagram of a secure communication method for DC interconnection according to an embodiment of this application;
FIG. 7 is a schematic diagram of a structure of a secure communication apparatus for DC interconnection according to an embodiment of this application;
FIG. 8 is a schematic diagram of another structure of a secure communication apparatus for DC interconnection according to an embodiment of this application;
FIG. 9 is a schematic diagram of a structure of a secure communication apparatus according to an embodiment of this application; and
FIG. 10 is a schematic diagram of another structure of a secure communication apparatus according to an embodiment of this application.

### DESCRIPTION OF EMBODIMENTS

To make the principles, technical solutions, and advantages of this application clearer, the following further describes implementations of this application in detail with reference to the accompanying drawings.

Currently, to ensure service reliability and continuity, an enterprise usually deploys DCs that carry a same service at a plurality of sites and interconnects the DCs at the plurality of sites. When a specific DC is faulty, another DC is used to ensure normal service running. For example, according to a national information security level protection requirement, a "two-site three-center" DC solution is gradually applied in a financial industry. "Two-site three-center" means that three DCs are deployed at two sites to carry a same service, thereby preventing a service fault and data loss caused by a power failure or a natural disaster in a specific DC. "Two-site" means intra-city and inter-city. "Three-center" refers to a production center, an intra-city disaster redundancy center, and an inter-city disaster redundancy center. The intra-city disaster redundancy center and the production center are located in a same city, and the inter-city disaster redundancy center and the production center are located in different places. For example, the inter-city disaster redundancy center and the production center are located in different cities.

Different DCs that carry a same service are interconnected through the internet (Internet) or a dedicated network. To ensure communication security between DCs, the different DCs communicate with each other through an encrypted tunnel or a carrier private line. For example, devices in the different DCs communicate with each other based on a MACsec technology to prevent a device outside the DC (such as a device on the internet) from performing replay attack (replay attack) on a device in the DC. The internet is also referred to as an inter-network or a public network. The dedicated network is a network dedicated for interconnection of specific DCs. For example, a network dedicated for interconnection of a DC1 and a DC2 may be referred to as a dedicated network, and the dedicated network is also referred to as a private network. The replay attack is a form of a malicious or fraudulent network attack that repeats or delays valid data. An attacker steals an authentication credential through network listening or in another manner, and sends a packet that has been received by a network device (or a host) to the network device (or the host) to perform replay attack on the network device (or the host), thereby consuming computing resources of the network device (or the host) and interfering the network device (or the host) in receiving and processing a normal packet. The replay attack can be performed by an initiator or an enemy that intercepts and retransmits the packet.

The MACsec technology is a layer 2 secure communication technology. The MACsec technology defines a data security communication method based on an institute of electrical and electronics engineers (institute of electrical and electronics engineers, IEEE) 802 local area network. The MACsec technology provides secure MAC layer data s ending and receiving services for a user. These services include user data encryption (confidentiality), data frame integrity (data integrity) checking, data origin authenticity (data origin authenticity) verification, and point-to-point replay protection (replay protection).

In an anti-replay-attack solution based on the MACsec technology, a PN is carried in a packet to prevent a packet receiver from suffering from the replay attack. However, the anti-replay-attack solution based on the MACsec technology depends on PN synchronization between two communication parties, and consecutiveness between the PN carried in the packet a PN recorded by each of the two communication parties. Therefore, the anti-replay-attack solution based on the MACsec technology is applicable only to a point-to-point communication scenario, and cannot be applicable to point-to-multipoint and multipoint-to-point communication scenarios. Currently, most DCs use MLAG networking. In the MLAG networking, point-to-multipoint communication and multipoint-to-point communication are often required. The anti-replay-attack solution based on the MACsec technology cannot provide replay protection for devices in the DCs in the MLAG networking.

In view of this, embodiments of this application provide a secure communication solution for DC interconnection. In the secure communication solution, replay protection is performed on a device in a DC by including a timestamp and/or a random number in a packet exchanged between devices in different DCs. The secure communication solution is not only applicable to a point-to-point communication scenario, but also applicable to point-to-multipoint and multipoint-to-point communication scenarios, and may be applied to a DC whose networking is MLAG networking. The secure communication solution is applicable to various scenarios and has high flexibility. The following describes the technical solutions of this application in detail.

Before the secure communication solution provided in embodiments of this application is described, an MLAG is first described.

The MLAG is a mechanism that implements inter-device link aggregation, and implements inter-device link aggregation between a device (for example, a host) and other two devices (for example, network devices) to improve link reliability from a board level to a device level. Two devices that belong to a same MLAG are dual-homing access devices of a same device. The two devices share a same virtual internet protocol (Internet Protocol, IP) address. A peer link (peer link) is established between the two devices. The two devices communicate with each other through the peer link. Interfaces directly connected to two ends of the peer link are referred to as peer link interfaces. The two devices are configured to perform load balancing on the device that accesses the two devices. For example, inter-device link aggregation is performed between a host 1 and a leaf 1 device and a leaf 2 device. The host 1 is dual-homed to the leaf 1 device and the leaf 2 device. The leaf 1 device and the leaf 2 device form an MLAG, and the leaf 1 device and the leaf 2 device share a same virtual IP address. A peer link is established between the leaf 1 device and the leaf 2 device. The leaf 1 device and the leaf 2 device are configured to perform load sharing on the host 1.

The foregoing describes the MLAG, and the following describes an application scenario of embodiments of this application.

The application scenario in embodiments of this application may be a data center interconnection (data center interconnection, DCI) network formed by interconnecting at least two DCs. The at least two DCs are configured to carry a same service. Each of the at least two DCs includes a plurality of network devices, and network devices in the plurality of DCs may perform mutual service access. When one of the plurality of DCs is faulty, another DC can be used to ensure normal service running. In an example, the at least two DCs include a production center and a disaster recovery center, and the disaster recovery center includes an intra-city disaster recovery center and/or an inter-city disaster redundancy center.

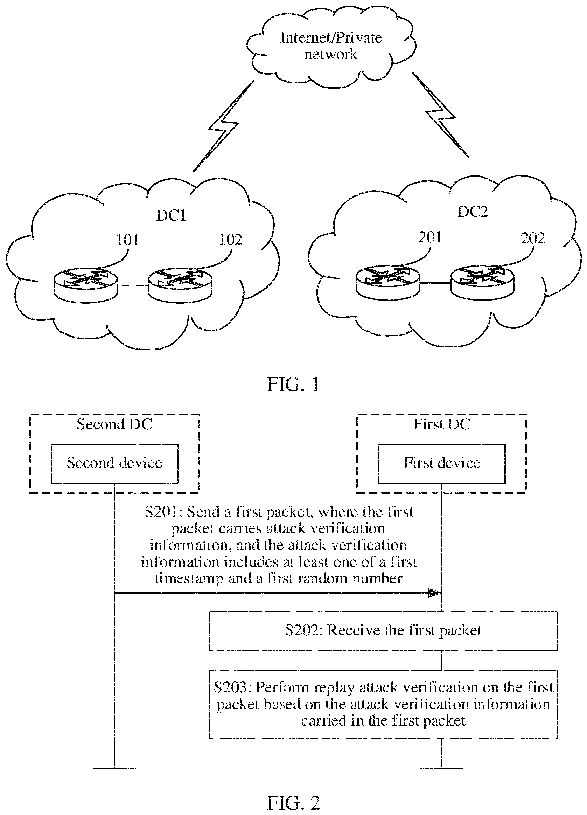

For example, FIG. 1 is a schematic diagram of a DCI network according to an embodiment of this application. FIG. 1 is described by using an example in which a DCI network includes a DC 1 and a DC 2. As shown in FIG. 1, the DC 1 and the DC 2 are interconnected by using the internet/private network, and the DC 1 and the DC 2 are used to carry a same service. The DC 1 includes a network device 101 and a network device 102, and the DC 2 includes a network device 201 and a network device 202. When the DC 1 is faulty, the DC 2 may be used to ensure normal running of the service.

The network device (for example, the network device 101, the network device 102, the network device 201, and the network device 202) may be a device such as a switch or a router (access router, AR). The network device 101, the network device 102, the network device 201, and the network device 202 may be a same device. For example, the network device 101, the network device 102, the network device 201, and the network device 202 are all switches. Alternatively, the network device 101, the network device 102, the network device 201, and the network device 202 may be different devices. For example, a part of the network device 101, the network device 102, the network device 201, and the network device 202 are ARs, and another part of the devices are switches. This is not limited in this embodiment of this application.

In a specific implementation, both networking of the DC 1 and networking of the DC 2 are MLAG networking. The network device 101 and the network device 102 form an MLAG (for example, an MLAG 1). The network device 101 and the network device 102 share a same virtual IP address. A peer link is established between the network device 101 and the network device 102. The network device 201 and the network device 202 form an MLAG (for example, an MLAG 2). The network device 201 and the network device 202 share a same virtual IP address. A peer link is established between the network device 201 and the network device 202. In an example, the network device 101, the network device 102, the network device 201, and the network device 202 are all leaf devices.

In a specific implementation, the DCI network further includes a control device (not shown in FIG. 1), and the control device is configured to control the network device in the DCI network. The control device in the DCI network includes a DC control device and/or a network control device. The DC control device is located in the DC, and is configured to control the network device in the DC. The DC control device is also referred to as an intra-domain (domain) control device. The network control device is located outside the DC, and is configured to control the DC, to be specific, control the DC control device. The network control device may control the network device in the DC by using the DC control device. In an example, the DC control device is a software-defined network (software-defined network, SDN) controller, and the network control device is a multi-domain controller (multi-domain controller, MDC).

It should be noted that the DCI network shown in FIG. 1 is merely used as an example, and is not used to limit the technical solutions in this embodiment of this application. In a specific implementation process, the DCI network may further include another device. A quantity of DCs included in the DCI network may be greater than 2, and a quantity of network devices in the DC may be greater than 2. This is not limited in this embodiment of this application.

The foregoing describes an application scenario of this application. The following describes method embodiments of this application with reference to the foregoing application scenario.

FIG. 2 is a flowchart of a secure communication method for DC interconnection according to an embodiment of this application. The secure communication method is applied to a DCI network including a first DC and a second DC. In this embodiment of this application, an example in which the secure communication method is used for communication between a first device in the first DC and a second device in the second DC is used for description. In a specific implementation, the first device in the first DC and a third device in the first DC form an MLAG, and the second device in the second DC and a fourth device in the second DC form an MLAG. For example, in the embodiment shown in FIG. 2, the first DC is the DC 1 in FIG. 1, the second DC is the DC 2 in FIG. 1, the first device is the network device 101 in FIG. 1, the third device is the network device 102 in FIG. 1, the second device is the network device 201 in FIG. 1, and the fourth device is the network device 202 in FIG. 1. Refer to FIG. 2. The secure communication method includes the following steps.

S201: The second device in the second DC sends a first packet to the first device in the first DC, where the first packet carries attack verification information, and the attack verification information includes at least one of a first timestamp and a first random number.

The second device in the second DC and the first device in the first DC communicate with each other by transmitting packets. To perform replay protection on the first device, a packet sent by the second device to the first device carries attack verification information. Similarly, to perform replay protection on the second device, a packet sent by the first device to the second device also carries attack verification information. In other words, in a process of communication between the second device and the first device, the second device and the first device perform replay protection on each other by including the attack verification information in the packet.

The first packet is any packet sent by the second device to the first device. The first packet carries the attack verification information, and the attack verification information in the first packet is used by the first device to perform replay attack verification on the first packet, that is, the attack verification information in the first packet is used by the first device to verify whether the first packet is a packet that performs replay attack on the first device.

In this embodiment of this application, the attack verification information in the first packet includes at least one of the first timestamp (timestamp) and the first random number (random), and the attack verification information in the first packet includes the following three cases.

**In** a first case: The attack verification information in the first packet includes the first timestamp.

In a specific implementation, the first timestamp is a timestamp at which the second device sends the first packet to the first device.

For example, the first timestamp is a timestamp at which the first packet is sent from an outbound interface of the second device, and the first timestamp may be included in the first packet by a chip of the outbound interface of the second device.

For another example, the first timestamp is included by a processor in the second device in the first packet, and after including the first timestamp in the first packet, the processor in the second device sends the first packet to the first device through an outbound interface of the second device.

**In a second case:** The attack verification information in the first packet includes the first random number.

In this embodiment of this application, the first random number included in the attack verification information in the first packet is determined by the second device in a first random number list (for example, a random number list A), or is generated by the second device. Therefore, the first random number included in the attack verification information in the first packet may include two possible implementations. In the second case of S201, the following describes, in two possible implementations, the first random number included in the attack verification information in the first packet.

**Implementation (1):** The first random number included in the attack verification information in the first packet is determined by the second device in the first random number list (for example, the random number list A). The first random number included in the attack verification information in the first packet is included in the first random number list (for example, the random number list A).

Before sending the first packet to the first device, the second device determines the first random number in the first random number list (for example, the random number list A), and includes the first random number determined from the first random number list (for example, the random number list A) in the first packet, so that the first packet carries the first random number. The first random number list (for example, the random number list A) includes at least one random number. Random numbers in the first random number list (for example, the random number list A) may be arranged in order. The second device may determine the first random number from the first random number list (for example, the random number list A) in order, or the second device randomly determines the first random number from the first random number list (for example, the random number list A). This is not limited in this embodiment of this application.

In a specific implementation, the second device maintains at least one random number list, each random number list corresponds to one DC (the second DC or a DC interconnected to the second DC), each random number list corresponds to one piece of list indication information, and the list indication information indicates a corresponding random number list. The second device determines, based on list indication information of the first random number list (for example, the random number list A), the first random number list (for example, the random number list A) from the at least one random number list maintained by the second device, and then determines the first random number from the first random number list (for example, the random number list A). For example, the list indication information is an identifier (for example, a list name) of the random number list or indication information of a DC corresponding to the random number list. The indication information of the DC may be an identifier of the DC, a sequence number of the DC, or the like. The first random number list (for example, the random number list A) corresponds to the first DC, and the indication information of the first random number list (for example, the random number list A) is indication information of the first DC. The second device determines the indication information of the first DC based on that the first device is located in the first DC, and determines, based on the indication information of the first DC, the first random number list (for example, the random number list A) from the at least one random number list maintained by the second device.

It should be noted that, in this embodiment of this application, an example in which each random number list maintained by the second device corresponds to one DC is used for description. In actual application, the second device may maintain one random number list (for example, a first random number list A), and the random number list (for example, the first random number list A) corresponds to the second DC and all DCs interconnected to the second DC. In this case, the second device directly determines a first random number from the random number list (for example, the first random number list A) maintained by the second device, a process of determining the first random number list (for example, the random number list A) based on list indication information of the first random number list (for example, the random number list A) does not need to be performed, and the attack verification information carried in the first packet may not include the list indication information of the first random number list (for example, the random number list A). This is not limited in this embodiment of this application.

In this embodiment of this application, each random number in the first random number list (for example, the random number list A) corresponds to aging duration, and aging duration corresponding to different random numbers is equal or unequal. When the second device uses the first random number in the first random number list (for example, the random number list A) for the first time (for example, when the second device includes the first random number in the packet sent to the first device for the first time), timing is performed on the first random number in the first random number list (for example, the random number list A). When timing duration of the first random number in the first random number list (for example, the random number list A) reaches aging duration corresponding to the first random number, the second device sets the first random number in the first random number list (for example, the random number list A) to an aged random number (for example, the first random number in the first random number list A is set to an invalid random number). A packet subsequently sent by the second device no longer carries the first random number in the first random number list (for example, the random number list A). In addition, when receiving a packet carrying the first random number, the second device determines that the first random number carried in the packet is invalid, and the packet is a replay attack packet.

It should be noted that in this embodiment of this application, the first random number in the first random number list (for example, the random number list A) is used as an example to describe the aging duration corresponding to the random number. In actual application, each random number in each random number list maintained by the second device may correspond to aging duration. For related descriptions of the aging duration corresponding to each random number, refer to related descriptions of the aging duration corresponding to the first random number. Details are not described herein again in this embodiment of this application. In this embodiment of this application, the aging duration is set for the random number, which helps improve communication security and improve anti-replay-attack effect.

In this implementation (1), the first random number list (the random number list A) maintained by the second device is obtained by the second device from a control device in the DCI network. Before the second device sends the first packet to the first device, the second device obtains the first random number list (for example, the random number list A) from the control device. That the second device obtains the first random number list (for example, the random number list A) from the control device may include: The second device actively obtains the first random number list (for example, the random number list A) from the control device, or the second device receives the first random number list (for example, the random number list A) pushed by the control device. After obtaining the first random number list (for example, the random number list A), the second device may store the first random number list (for example, the random number list A). For example, the second device obtains the first random number list (for example, the random number list A) and the list indication information of the first random number list (for example, the random number list A) from the control device, and stores the first random number list (for example, the random number list A) and the list indication information of the first random number list (for example, the random number list A).

The control device described herein is a network control device (for example, an MDC) or a DC control device (for example, an SDN controller) in the second DC. In an example, the first random number list (for example, the random number list A) is generated by the MDC. After generating the first random number list (for example, the random number list A), the MDC sends the first random number list (for example, the random number list A) to the SDN controller in the second DC through an RESTful interface, and the SDN controller in the second DC transparently transmits the first random number list (for example, the random number list A) to the second device, so that the second device can obtain the first random number list (for example, the random number list A). The SDN controller in the second DC may transparently transmit the first random number list (for example, the random number list A) to all or a part of network devices in the second DC. This is not limited in this embodiment of this application. In a specific implementation, to ensure security, the control device may periodically or aperiodically update the first random number list, and deliver an updated first random number list to a device in each DC.

Based on this implementation (1), the attack verification information in the first packet further includes the list indication information of the first random number list (for example, the random number list A), so that the first device determines the first random number list (for example, the random number list A) based on the list indication information of the first random number list (for example, the random number list A) included in the attack verification information in the first packet, and performs replay attack verification on the first packet based on the first random number list (for example, the random number list A) and the first random number included in the attack verification information in the first packet.

**Implementation (2):** The first random number included in the attack verification information in the first packet is generated by the second device.

Before sending the first packet to the first device, the second device may generate the first random number, and include the generated first random number in the first packet, so that the first packet carries the first random number.

**In a third case:** The attack verification information in the first packet includes the first timestamp and the first random number.

In the third case, for related descriptions of the first timestamp, refer to the first case. The first random number is determined by the second device in the first random number list (for example, the random number list A) or generated by the second device. For related descriptions of the first random number, refer to the second case. Details are not described herein again in this embodiment of this application.

The foregoing describes content of the attack verification information, and the following describes a location of the attack verification information in the first packet.

In this embodiment of this application, the first packet includes a security header, and the attack verification information is located in the security header of the first packet. The security header is a service security (servicesec) header or a MACsec header. For example, the first packet is a layer 2 communication packet, and the security header in the first packet is the MACsec header; or the first packet is a layer 3 communication packet, and the security header in the first packet is the service security header. The first packet may further include a user datagram protocol (user datagram protocol, UDP) header. If the security header in the first packet is the service security header, a destination port number in the UDP header may indicate the service security header.

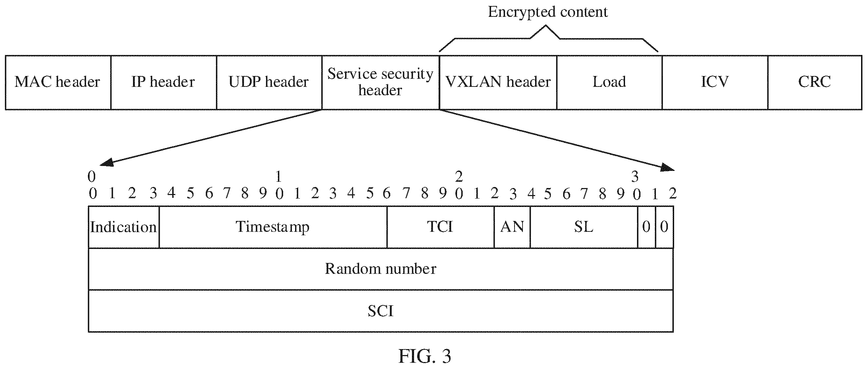

For example, FIG. 3 is a schematic diagram of a first packet according to an embodiment of this application. FIG. 3 is described by using an example in which a security header in the first packet is a service security header. The first packet further includes a UDP header, the UDP header includes a destination port number (specific content of the UDP header is not shown in FIG. 3), and the destination port number in the UDP header indicates the service security header. The first packet further includes encrypted content, an IP header, a MAC header, an integrity check value (integrity check value, ICV), and a cyclic redundancy check code (cyclic redundancy check, CRC). The encrypted content includes a virtual extensible local area network (virtual extensible local area network, VXLAN) header and a payload. The service security header is located between the VXLAN header and the UDP header. This embodiment of this application mainly describes content of the service security header. As shown in FIG. 3, the service security header of the first packet includes a timestamp field and a random number field, a first timestamp included in attack verification information is located in the timestamp field, and a first random number included in the attack verification information is located in the random number field. The service security header further includes an indication field. When the attack verification information includes list indication information of a first random number list (for example, a random number list A), the list indication information of the first random number list (for example, the random number list A) is located in the indication field. For example, the indication field is a site (site) field, and the list indication information of the first random number list (for example, the random number list A) is a sequence number of the first DC. As shown in FIG. 3, the indication field occupies three bits, and the indication field supports secure communication in an interconnection scenario of up to eight DCs. The timestamp field occupies 13 bits, and the timestamp field can support a timestamp error of a millisecond level. The random number field occupies 32 bits, and the random number field can support a random number with a large length. The service security header further includes a tag control information (tag control information, TCI) field, an association number (association number, AN) field, a short length (short length, SL) field, a security channel identifier (Secure channel identifier, SCI) field, and a 2-bit idle field (a field in which two pieces of data 0 in the service security header are located in FIG. 3).

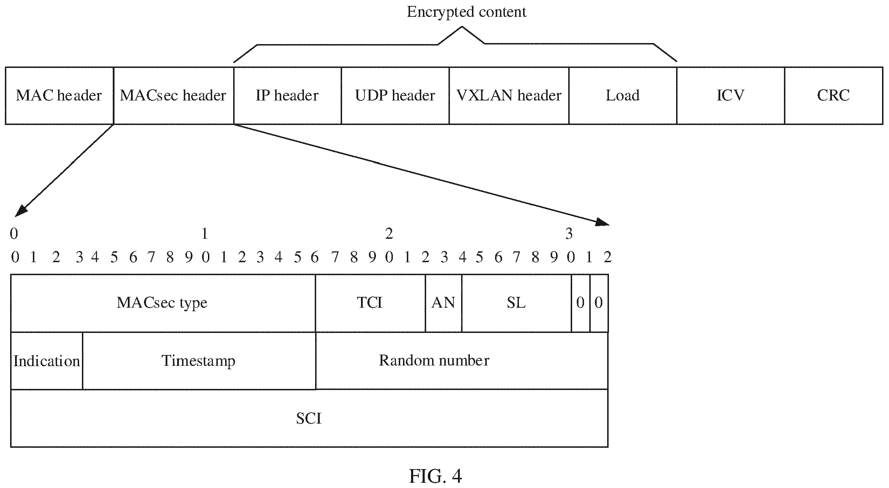

For example, FIG. 4 is a schematic diagram of another first packet according to an embodiment of this application. FIG. 4 is described by using an example in which a security header in the first packet is a MACsec header. The first packet further includes encrypted content, a MAC header, an ICV, and a CRC. The encrypted content includes an IP header, a UDP header, a VXLAN header, and a payload. The MACsec header is located between the MAC header and the IP header. This embodiment of this application mainly describes content of the MACsec header. As shown in FIG. 4, the MACsec header of the first packet includes a timestamp field and a random number field, a first timestamp included in attack verification information is located in the timestamp field, and a first random number included in the attack verification information is located in the random number field. The MACsec header further includes an indication field. When the attack verification information includes list indication information of a first random number list (for example, a random number list A), the list indication information of the first random number list (for example, the random number list A) is located in the indication field. For example, the indication field is a site field, and the list indication information of the first random number list (for example, the random number list A) is a sequence number of the first DC. As shown in FIG. 4, the indication field occupies three bits, and the indication field supports secure communication in an interconnection scenario of up to eight DCs. The timestamp field occupies 13 bits, and the timestamp field can support a timestamp error of a millisecond level. The random number field occupies 16 bits. The MACsec header further includes a MACsec type field, a TCI field, an AN field, an SL field, an SCI field, and a 2-bit idle field (a field in which two pieces of data 0 in the MACsec header are located in FIG. 4). A value of the MACsec type field indicates that a packet header in which the MACsec type field is located is the MACsec header.

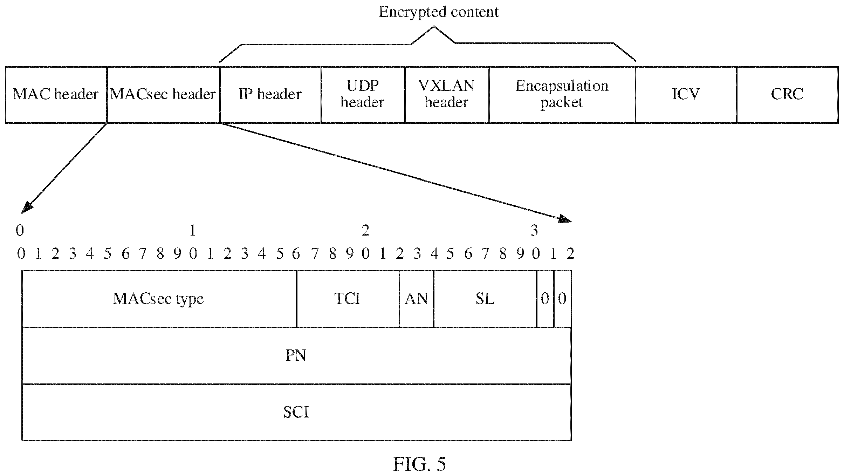

Both the service security header and the MACsec header provided in this embodiment of this application are obtained by improving the current MACsec header. For ease of understanding the service security header and the MACsec header in this application, the current MACsec header is described herein with reference to a structure of a MACsec packet. For example, FIG. 5 is a schematic diagram of a MACsec packet according to an embodiment of this application. As shown in FIG. 5, the MACsec packet includes encrypted content, a MAC header, a MACsec header, an ICV, and a CRC. The encrypted content includes an IP header, a UDP header, a VXLAN header, and a payload. The MACsec header is located between the MAC header and the IP header. The MACsec header includes a MACsec type field, a TCI field, an AN field, an SL field, an SCI field, a PN field, and a 2-bit idle field. A value of the MACsec type field indicates that a packet header in which the MACsec type field is located is the MACsec header, and the PN field is used to carry a PN in the packet in the current MAC technology.

It can be learned by comparing FIG. 4 and FIG. 5 that, in this embodiment of this application, the PN field in the current MACsec header is divided into an indication field used to carry list indication information, a timestamp field used to carry a timestamp, and a random number field used to carry a random number, so that anti-replay-attack can be performed based on the timestamp and/or the random number in this embodiment of this application. It can be learned from FIG. 3 and FIG. 5 that, in this embodiment of this application, the current MACsec header is adj usted from between the MAC header and the IP header to between the UDP header and the VXLAN header. The MACsec type field in the MACsec header is divided into an indication field used to carry list indication information and a timestamp field used to carry a timestamp. The PN field in the MACsec header is adjusted to a random number field used to carry a random number. Therefore, anti-replay-attack can be performed based on the timestamp and/or the random number in this embodiment of this application. It should be noted that, after the MACsec header is adjusted from between the MAC header and the IP header to between the UDP header and the VXLAN header, the MACsec type field may not need to indicate the MACsec header, but a destination port number in the UDP header indicates the MACsec header, so that the MACsec type field may be improved. In this way, the MACsec type field is divided into an indication field used to carry list indication information and a timestamp field used to carry a timestamp (for example, as shown in FIG. 3).

It should be noted that, when the service security header of the first packet is described in FIG. 3, and when the MACsec header of the first packet is described in FIG. 4, an example in which the attack verification information in the first packet includes the first timestamp, the first random number, and the list indication information of the first random number list (for example, the random number list A) is used for description. As described above, the attack verification information in the first packet may include only the first timestamp or the first random number. In this case, if the attack verification information in the first packet includes only the first timestamp, values of the random number field and the indication field in the first packet may be set to null, or the random number field and the indication field do not need to be set in the first packet. If the attack verification information in the first packet includes only the first random number, value of the timestamp field and the indication field in the first packet may be set to null, or the timestamp field and the indication field do not need to be set in the first packet. In a specific implementation, if the first random number in the first packet is generated by the second device, and the attack verification information in the first packet may not include the list indication information of the first random number list (for example, the random number list A), the indication field used to carry the list indication information of the first random number list (for example, the random number list A) does not need to be set in the first packet. In addition, in the first packet shown in FIG. 3 to FIG. 5, a quantity of bits occupied by the indication field, a quantity of bits occupied by the timestamp field, and a quantity of bits occupied by the random number field may all be adjusted as required. In the first packet shown in FIG. 3 to FIG. 5, the payload is also referred to as an encapsulation packet (encap packet), the ICV is used for integrity check of the first packet, the CRC is used for error check of the first packet, the IP header includes IP information such as a source IP address and a destination IP address of the packet, the MAC header includes MAC information such as a source MAC address and a destination MAC address of the first packet, and the VXLAN header includes VXLAN information of the first packet. For specific purposes of the TCI field, the AN field, the SL field, and the SCI field, refer to the MACsec header in the MACsec technology. Details are not described herein again in this embodiment of this application.

S202: The first device in the first DC receives the first packet sent by the second device in the second DC.

Corresponding to that the second device in the second DC sends the first packet to the first device in the first DC, the first device in the first DC receives the first packet sent by the second device in the second DC. It can be learned from S201 that the first packet carries the attack verification information, and the attack verification information includes at least one of the first timestamp and the first random number.

S203: The first device in the first DC performs replay attack verification on the first packet based on the attack verification information carried in the first packet.

After receiving the first packet, the first device performs replay attack verification on the first packet based on the attack verification information carried in the first packet. That is, the first device verifies, based on the attack verification information carried in the first packet, whether the first packet is the packet that performs replay attack on the first device, or the first device verifies whether the first packet is the replay attack packet. For example, the first device may first extract the attack verification information from the first packet, and then perform replay attack verification on the first packet based on the attack verification information. For example, the first device extracts the attack verification information from the security header of the first packet.

In a specific implementation, the first device performs replay attack verification on the first packet depending on whether the attack verification information carried in the first packet meets a first condition. When the attack verification information carried in the first packet meets the first condition, the first device determines that the first packet passes the replay attack verification, so that the first device determines that the first packet is not the packet that performs replay attack on the first device (that is, the first packet is not the replay attack packet). When the attack verification information carried in the first packet does not meet the first condition, the first device determines that the first packet fails to pass the replay attack verification, so that the first device determines that the first packet is the packet that performs replay attack on the first device (that is, the first packet is the replay attack packet).

In this embodiment of this application, the attack verification information in the first packet includes the three cases described in S201, and correspondingly, the first condition in S203, and that the first device performs replay attack verification on the first packet depending on whether the attack verification information carried in the first packet meets the first condition in S203 separately include the following three cases.

**In a first case:** The attack verification information in the first packet includes a first timestamp, and the first condition includes that a time difference between a second timestamp and the first timestamp is less than or equal to a first threshold. The first device performs replay attack verification on the first packet depending on whether the time difference between the second timestamp and the first timestamp is less than or equal to the first threshold.

In a specific implementation, the first timestamp is a timestamp at which the second device sends the first packet to the first device, the second timestamp is a timestamp at which the first device receives the first packet, and clocks of the first device and the second device are synchronized. The first device may determine the time difference between the second timestamp and the first timestamp, and determine whether the time difference between the second timestamp and the first timestamp is less than or equal to the first threshold. If the time difference between the second timestamp and the first timestamp is less than or equal to the first threshold, the first device determines that the attack verification information carried in the first packet meets the first condition, and therefore determines that the first packet passes the replay attack verification. If the time difference between the second timestamp and the first timestamp is greater than the first threshold, the first device determines that the attack verification information carried in the first packet does not meet the first condition, and therefore determines that the first packet fails to pass the replay attack verification.

The first threshold is determined based on a duration of packet transmission between the two devices. For example, the first threshold is determined based on an average duration of packet transmission between the first device and the second device. This is not limited in this embodiment of this application.

**In a second case:** The attack verification information in the first packet includes a first random number, and the first condition includes that the first random number included in the attack verification information and a first random number list (for example, a random number list A or a random number list B) meet a matching rule. The first device performs replay attack verification on the first packet depending on whether the first random number included in the attack verification information in the first packet and the first random number list (for example, the random number list A or the random number list B) meet the matching rule.

It can be learned from the description of S201 that the first random number included in the attack verification information in the first packet is determined by the second device in the first random number list (for example, the random number list A), or is generated by the second device. According to different sources of the first random number included in the attack verification information in the first packet, the first random number included in the attack verification information and the first random number list meet different matching rules. In the second case of S203, the following describes, in two possible implementations, the matching rule that is met by the first random number included in the attack verification information and the first random number list (for example, the random number list A or the random number list B), and a process of the first device performing replay attack verification on the first packet depending on whether the first random number included in the attack verification information and the first random number list (for example, the random number list A or the random number list B) meet the matching rule. The random number list A is the first random number list in S201, and the random number list B may be constructed by the first device based on the random number carried in the received packet.

**Implementation (1):** The matching rule includes that the first random number included in the attack verification information is in the first random number list (for example, the random number list A). The first device performs replay attack verification on the first packet depending on whether the first random number included in the attack verification information is in the first random number list (for example, the random number list A).

The first device may determine the first random number list (for example, the random number list A), and compare the first random number included in the attack verification information with a random number in the first random number list (for example, the random number list A), to determine whether the first random number included in the attack verification information is in the first random number list (for example, the random number list A). If the first random number included in the attack verification information is in the first random number list (for example, the random number list A), the first device determines that the attack verification information carried in the first packet meets the first condition, so that the first device determines that the first packet passes the replay attack verification. If the first random number included in the attack verification information is not in the first random number list (for example, the random number list A), the first device determines that the attack verification information carried in the first packet does not meet the first condition, so that the first device determines that the first packet fails to pass the replay attack verification.

In a specific implementation, the first device maintains at least one random number list, each random number list corresponds to one DC (the first DC or a DC interconnected to the first DC), each random number list corresponds to one piece of list indication information, and the list indication information indicates a corresponding random number list. The attack verification information carried in the first packet further includes list indication information of the first random number list (for example, the random number list A). The first device determines, based on the list indication information of the first random number list (for example, the random number list A), the first random number list (for example, the random number list A) from the at least one random number list maintained by the first device, and then determines whether the first random number included in the attack verification information is in the first random number list (for example, the random number list A). For example, the list indication information of the random number list is an identifier (for example, a list name) of the random number list or indication information of a DC corresponding to the random number list. The indication information of the DC may be an identifier of the DC, a sequence number of the DC, or the like. The first random number list (for example, the random number list A) corresponds to the first DC, and the indication information of the first random number list (for example, the random number list A) is indication information of the first DC. The first device determines, based on the indication information of the first DC, the first random number list (for example, the random number list A) from the at least one random number list maintained by the first device.

It should be noted that in this embodiment of this application, an example in which each random number list maintained by the first device corresponds to one DC is used for description. In actual application, the first device may maintain one random number list (for example, a first random number list A), and the random number list (for example, the first random number list A) corresponds to the first DC and all DCs connected to the first DC. In this case, the first device directly determines whether the first random number included in the attack verification information is in the first random number list (for example, the random number list A), a process of determining the first random number list based on list indication information of the firs t random number list (for example, the random number list A) does not need to be performed, and the attack verification information carried in the first packet may not include the list indication information of the first random number list (for example, the random number list A). This is not limited in this embodiment of this application.

In this embodiment of this application, each random number in the first random number list (for example, the random number list A) corresponds to aging duration, and aging duration corresponding to different random numbers is equal or unequal. When the first device uses the first random number in the first random number list (for example, the random number list A) for the first time (for example, the first device determines that the first random number is in the first random number list for the first time), timing is performed on the first random number in the first random number list (for example, the random number list A). When timing duration of the first random number in the first random number list (for example, the random number list A) reaches aging duration corresponding to the first random number, the first device sets the first random number in the first random number list (for example, the random number list A) to an aged random number (for example, the first random number in the first random number list A is set to an invalid random number). Subsequently, when receiving a packet carrying the first random number, the first device determines that the first random number carried in the packet is invalid, and determines that the packet is a replay attack packet. In addition, when sending a packet, the first device does not use the first random number in the first random number list (for example, the random number list A).

It should be noted that in this embodiment of this application, the first random number in the first random number list (for example, the random number list A) is used as an example to describe the aging duration corresponding to the random number. In actual application, each random number in each random number list maintained by the first device may correspond to an aging duration. For related descriptions of the aging duration corresponding to each random number, refer to related descriptions of the aging duration corresponding to the first random number. Details are not described herein again in this embodiment of this application. In this embodiment of this application, the aging duration is set for the random number, which helps improve communication security and improve anti-replay-attack effect.

In this implementation (1), the first random number list (the random number list A) maintained by the first device is obtained by the first device from a control device in a DCI network. Before the first device performs replay attack verification on the first packet based on the attack verification information carried in the first packet, the first device obtains the first random number list (for example, the random number list A) from the control device. That the first device obtains the first random number list (for example, the random number list A) from the control device may include: The first device actively obtains the first random number list (for example, the random number list A) from the control device, or the first device receives the first random number list (for example, the random number list A) pushed by the control device. After obtaining the first random number list (for example, the random number list A), the first device may store the first random number list (for example, the random number list A). For example, the first device obtains the first random number list (for example, the random number list A) and the list indication information of the first random number list (for example, the random number list A) from the control device, and stores the first random number list (for example, the random number list A) and the list indication information of the first random number list (for example, the random number list A).

The control device described herein is a network control device (for example, an MDC) or a DC control device (for example, an SDN controller) in the first DC. In an example, the first random number list (for example, the random number list A) is generated by the MDC. After generating the first random number list (for example, the random number list A), the MDC sends the first random number list (for example, the random number list A) to the SDN controller in the first DC through an RESTful interface, and the SDN controller in the first DC transparently transmits the first random number list (for example, the random number list A) to the first device, so that the first device can obtain the first random number list (for example, the random number list A). The SDN controller in the first DC may transparently transmit the first random number list (for example, the random number list A) to all or a part of network devices in the first DC. This is not limited in this embodiment of this application. In a specific implementation, to ensure security, the control device may periodically or aperiodically update the first random number list, and deliver an updated first random number list to a device in each DC.

**Implementation (2):** The matching rule includes that the first random number included in the attack verification information is not in the first random number list (for example, the random number list B). The first device performs replay attack verification on the first packet depending on whether the first random number included in the attack verification information is in the first random number list (for example, the random number list B).

The first device may determine the first random number list (for example, the random number list B), and compare the first random number included in the attack verification information with a random number in the first random number list (for example, the random number list B), to determine whether the first random number included in the attack verification information is in the first random number list (for example, the random number list B). If the first random number included in the attack verification information is not in the first random number list (for example, the random number list B), the first device determines that the attack verification information carried in the first packet meets the first condition, and therefore determines that the first packet passes the replay attack verification. If the first random number included in the attack verification information is in the first random number list (for example, the random number list B), the first device determines that the attack verification information carried in the first packet does not meet the first condition, and therefore determines that the first packet fails to pass the replay attack verification.

In a specific implementation, after the first device performs replay attack verification on the first packet, if the first packet passes the replay attack verification, the first device determines that the first packet is not a replay attack packet, and the first device records the first random number in the first random number list (for example, the random number list B). Therefore, when subsequently receiving a packet carrying the first random number, the first device determines that the packet is the replay attack packet. In this embodiment of this application, the first random number list (for example, the random number list B) is constructed by the first device based on the random number carried in the received packet. When receiving the packet carrying the random number for the first time, the first device constructs the first random number list (for example, the random number list B), and records the random number carried in the packet in the first random number list (for example, the random number list B). Subsequently, each time the first device receives a packet carrying the random number, if a random number in the packet is not in the first random number list (for example, the random number list B), the first device records the random number carried in the packet in the first random number list (for example, the random number list B).

**In a third case:** The attack verification information in the first packet includes a first timestamp and a first random number, the first condition includes that a time difference between the first timestamp and a second timestamp is less than or equal to a first threshold, and the first random number and the first random number list (for example, a random number list A or a random number list B) meet a matching rule. The first device performs replay attack verification on the first packet depending on whether the time difference between the second timestamp and the first timestamp is less than or equal to the first threshold and whether the first random number and the first random number list (for example, the random number list A or the random number list B) meet the matching rule.

In a specific implementation, the first device determines whether the time difference between the second timestamp and the first timestamp is less than or equal to the first threshold. If the time difference between the second timestamp and the first timestamp is less than or equal to the first threshold, the first device determines whether the first random number included in the attack verification information and the first random number list (for example, the random number list A or the random number list B) meet the matching rule. If the first random number included in the attack verification information and the first random number list (for example, the random number list A or the random number list B) meet the matching rule, the first device determines that the attack verification information carried in the first packet meets the first condition, so that the first device determines that the first packet passes the replay attack verification. If the time difference between the second timestamp and the first timestamp is greater than the first threshold, or the time difference between the second timestamp and the first timestamp is less than or equal to the first threshold, but the first random number included in the attack verification information and the first random number list (for example, the random number list A or the random number list B) do not meet the matching rule, the first device determines that the attack verification information carried in the first packet does not meet the first condition, so that the first device determines that the first packet fails to pass the replay attack verification. For an implementation process in which the first device determines whether the first random number included in the attack verification information and the first random number list (for example, the random number list A or the random number list B) meet the matching rule, refer to the two implementations in the second case in S203. Details are not described herein again in this embodiment of this application.

It should be noted that in this embodiment of this application, an example in which the first device first determines whether the time difference between the second timestamp and the first timestamp is less than or equal to the first threshold, and then determines whether the first random number included in the attack verification information and the first random number list (for example, the random number list A or the random number list B) meet the matching rule is used for description. In actual application, the first device may first determine whether the first random number included in the attack verification information and the first random number list (for example, the random number list A or the random number list B) meet the matching rule, and then may determine whether the time difference between the second timestamp and the first timestamp is less than or equal to the first threshold. A sequence of determining whether the attack verification information meets the first condition is not limited in this embodiment of this application.

In a specific implementation, if the first device determines that the first packet passes the replay attack verification, the first device determines that the first packet is not a packet that is used to perform replay attack on the first device, and the first device may process the first packet. For example, the first device decrypts encrypted content in the first packet. If the first device determines that the first packet fails to pass the replay attack verification, the first device determines that the first packet is a packet that performs replay attack on the first device, and the first device discards the first packet. In this way, performance loss of the first device caused by processing the replay attack packet by the first device can be avoided.

In this embodiment of this application, to ensure data security, the encrypted content in the first packet is encrypted by using an asymmetric key (asymmetric key). The asymmetric key includes an encryption key and a decryption key that are asymmetric (that is, the encryption key and the decryption key are different). The encrypted content in the first packet may be obtained by the second device by encrypting plaintext content by using the encryption key in the asymmetric key used for communication with the first device. The first device may determine the decryption key in the asymmetric key used for communication with the second device, and decrypt the encrypted content in the first packet by using the decryption key.

Before the first device determines the decryption key used for communication with the second device, the first device and the second device may synchronize asymmetric keys. The following describes a process in which the first device and the second device synchronize the asymmetric keys.

The first device and the second device determine a key server (that is, determine a role of which device of the first device and the second device is the key server) in the first device and the second device according to a key server priority (key server priority). An example in which a role of the first device is the key server is used. The MDC in the DCI network separately delivers security key parameters such as a security connectivity association key (secure connectivity association key, CAK) and a security connectivity association key name (secure connectivity association key name, CKN) to the SDN controller (for example, an SDN controller 1) in the first DC and the SDN controller in the second DC. After receiving the security key parameter from the MDC, the SDN controller 1 transparently transmits the security key parameter to the first device. After receiving the security key parameter from the MDC, an SDN controller 2 transparently transmits the security key parameter to the second device. Both the first device and the second device generate ICV keys (ICV key, ICK) and key encryption keys (key encrypting key, KEK) based on the received security key parameter. The ICKs generated by the first device and the second device are the same, and the KEKs generated by the first device and the second device are the same. The KEK is a symmetric key (symmetric key), and the symmetric key includes an encryption key and a decryption key that are symmetric (that is, the encryption key and the decryption key are the same). The first device serving as the key server further generates a security association key (secure association key, SAK) based on the security key parameter, where the SAK is an asymmetric key. After generating the SAK, the first device encrypts the SAK and the ICK based on the KEK to obtain an encrypted key, where the encrypted key includes the SAK and the ICK. The first device sends the encrypted key to the second device, and the second device decrypts the encrypted key by using the KEK generated by the second device, to obtain a plaintext SAK and ICK. The second device performs, based on the ICK generated by the second device and the ICK obtained through decryption, integrity check on the SAK obtained through decryption. After the check succeeds, the second device stores the SAK. In this case, the first device and the second device complete synchronization of the SAKs (that is, the asymmetric keys).

In this embodiment of this application, an example in which the first device decrypts the encrypted content in the first packet when the first packet is not the replay attack packet is used for description. After decrypting the encrypted content in the first packet, the first device may apply decrypted content. For example, the first device is a network device. After decrypting the encrypted content in the first packet, the first device sends decrypted content to a host. This is not limited in this embodiment of this application.

In conclusion, according to the secure communication method for DC interconnection provided in embodiments in this application, the first packet sent by the second device in the second DC to the first device in the first DC carries the attack verification information, where the attack verification information includes at least one of the first time stamp and the first random number. After receiving the first packet, the first device performs replay attack verification on the first packet based on the attack verification information carried in the first packet. If the first packet passes the replay attack verification, the first device processes the first packet, or if the first packet fails to pass the replay attack verification, the first device discards the first packet, to implement the replay protection on the first device, and avoid performance consumption of the first device caused by processing the replay attack packet by the first device. In this embodiment of this application, the replay protection is performed on the device in the DC by including the timestamp and/or the random number in the packet exchanged between the devices in the different DCs. This is not only applicable to a point-to-point communication scenario, but also applicable to point-to-multipoint and multipoint-to-point communication scenarios. This helps extend the application scenario of the secure communication method, and improves flexibility of the secure communication method. The secure communication method provided in embodiments of this application may be applied to the cross-intemet/private network communication scenario between the DCs, to help avoid performance loss caused to the device in the DC when an unauthorized user in the internet/private network sends the replay attack packet to the device in the DC.

With reference to the accompanying drawings, the following uses a specific example to describe the secure communication method for DC interconnection provided in embodiments of this application.

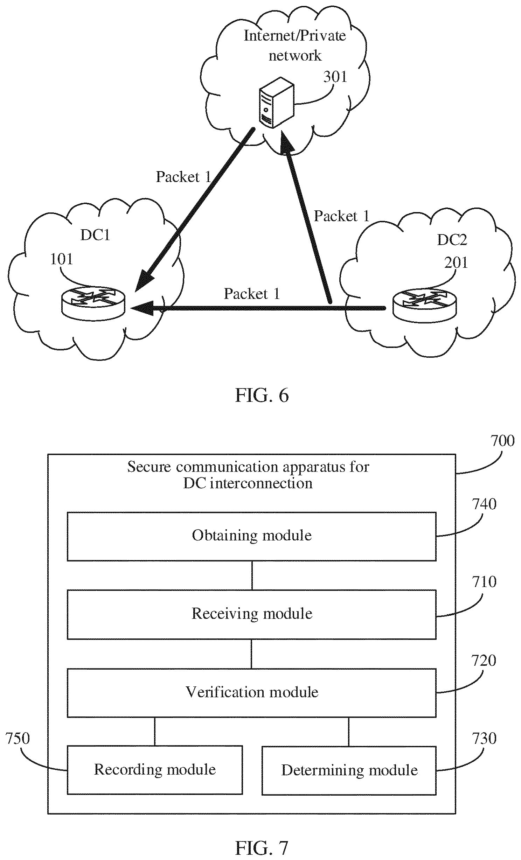

FIG. 6 is a schematic diagram of a secure communication method for DC interconnection according to an embodiment of this application. A packet 1 sent by the network device 201 in the DC2 to the network device 101 in the DC1 is illegally intercepted by a device 301 in the internet/private network, and the device 301 performs replay attack on the network device 101 by sending the packet 1 to the network device 101.

This embodiment is described by using an example in which attack verification information carried in the packet 1 sent by the network device 201 to the network device 101 includes a first timestamp 1, a first random number 1, and a sequence number of the DC 1. The following scenarios may exist.

Scenario 1: After intercepting the packet 1, the device 301 does not modify the packet 1, but directly sends the packet 1 to the network device 101 to perform replay attack on the network device 101. After receiving the packet 1, the network device 101 determines that the network device 101 receives a second timestamp 2 of the packet 1. In a possible case, the network device 101 determines that a time difference between the second timestamp 2 and the first timestamp 1 carried in the packet 1 is greater than a first threshold, so that the network device 101 determines that the received packet 1 is a replay attack packet. Alternatively, in another possible case, the network device 101 determines that a time difference between the second timestamp 2 and the first timestamp 1 carried in the packet 1 is less than a first threshold, the network device 101 determines a first random number list A based on the sequence number of the DC1 carried in the packet 1, and the network device 101 determines that a first random number 1 carried in the packet 1 is in the first random number list A, but the first random number 1 in the first random number list A is an aging random number, so that the network device 101 determines that the received packet 1 is a replay attack packet. Alternatively, in still another possible case, the network device 101 determines that a time difference between the second timestamp 2 and the first timestamp 1 carried in the packet 1 is less than a first threshold, the network device 101 determines a first random number list A based on the sequence number of the DC1 carried in the packet 1, the network device 101 determines that a first random number 1 carried in the packet 1 is in the first random number list A, and the first random number 1 in the first random number list A is not an aging random number, so that the network device 101 determines that the received packet 1 is not a replay attack packet. However, because the device 301 continuously sends the packet 1 to the network device 101 to perform replay attack on the network device 101, as time moves, the network device 101 determines that the time difference between the second timestamp 2 of the packet 1 received by the network device 101 and the first timestamp 1 carried in the packet 1 is greater than the first threshold, so that the network device 101 determines that the received packet 1 is the replay attack packet.

Scenario 2: After intercepting the packet 1, the device 301 modifies the first timestamp 1 in the packet 1 to a first timestamp 3, and the device 301 sends a modified packet 1 to the network device 101. After receiving the packet 1, the network device 101 determines that the network device 101 receives a second timestamp 2 of the packet 1. In a possible case, the network device 101 determines that a time difference between the second timestamp 2 and the first timestamp 3 carried in the packet 1 is greater than a first threshold, so that the network device 101 determines that the received packet 1 is a replay attack packet. Alternatively, in another possible case, the network device 101 determines that a time difference between the second timestamp 2 and the first timestamp 3 carried in the packet 1 is less than a first threshold, the network device 101 determines a first random number list A based on the sequence number of the DC1 carried in the packet 1, and the network device 101 determines that a first random number 1 carried in the packet 1 is in the first random number list A, but the first random number 1 in the first random number list A is an aging random number, so that the network device 101 determines that the received packet 1 is a replay attack packet. Alternatively, in still another possible case, the network device 101 determines that a time difference between the second timestamp 2 and the first timestamp 3 carried in the packet 1 is less than a first threshold, the network device 101 determines a first random number list A based on the sequence number of the DC1 carried in the packet 1, the network device 101 determines that a first random number 1 carried in the packet 1 is in the first random number list A, and the first random number 1 in the first random number list A is not an aging random number, so that the network device 101 determines that the received packet 1 is not a replay attack packet.

Scenario 3: After intercepting the packet 1, the device 301 modifies the first random number 1 in the packet 1 to a first random number 2, and the device 301 sends a modified packet 1 to the network device 101. After receiving the packet 1, the network device 101 determines that the network device 101 receives a second timestamp 2 of the packet 1. In a possible case, the network device 101 determines that a time difference between the second timestamp 2 and a first timestamp 3 carried in the packet 1 is greater than a first threshold, so that the network device 101 determines that the received packet 1 is a replay attack packet. Alternatively, in another possible case, the network device 101 determines that a time difference between the second timestamp 2 and a first timestamp 3 carried in the packet 1 is less than a first threshold, the network device 101 determines a first random number list A based on the sequence number of the DC1 carried in the packet 1, and the network device 101 determines that a first random number 2 carried in the packet 1 is not in the first random number list A, so that the network device 101 determines that the received packet 1 is a replay attack packet.

Scenario 4: After intercepting the packet 1, the device 301 modifies the first timestamp 1 in the packet 1 to a first timestamp 3 and modifies the first random number 1 in the packet 1 to a first random number 2, and the device 301 sends a modified packet 1 to the network device 101. After receiving the packet 1, the network device 101 determines that the network device 101 receives a second timestamp 2 of the packet 1. In a possible case, the network device 101 determines that a time difference between the second timestamp 2 and the first timestamp 3 carried in the packet 1 is greater than a first threshold, so that the network device 101 determines that the received packet 1 is a replay attack packet. Alternatively, in another possible case, the network device 101 determines that a time difference between the second timestamp 2 and the first timestamp 3 carried in the packet 1 is less than a first threshold, the network device 101 determines a first random number list A based on the sequence number of the DC1 carried in the packet 1, and the network device 101 determines that a first random number 2 carried in the packet 1 is not in the first random number list A, so that the network device 101 determines that the received packet 1 is a replay attack packet.

The foregoing describes the secure communication method for DC interconnection provided in embodiments of this application. The following describes apparatus embodiments of this application. The apparatuses in this application may be configured to perform the secure communication method in this application. For details not disclosed in apparatus embodiments of this application, refer to the method embodiments of this application.

FIG. 7 is a schematic diagram of a structure of a secure communication apparatus 700 for DC interconnection according to an embodiment of this application. The secure communication apparatus 700 is used in a first device in a first DC. For example, the secure communication apparatus 700 is the first device or a function component in the first device. Refer to FIG. 7. The secure communication apparatus 700 may include but is not limited to:
A receiving module 710 is configured to receive a first packet sent by a second device in a second DC, where the first packet carries attack verification information, and the attack verification information includes at least one of a first timestamp and a first random number. For function implementation of the receiving module 710, refer to related descriptions in S202.

A verification module 720 is configured to perform replay attack verification on the first packet based on the attack verification information. For function implementation of the verification module 720, refer to related descriptions in S203.

In a specific implementation, still refer to FIG. 7. The secure communication apparatus 700 further includes: a determining module 730, configured to: when a first condition is met, determine that the first packet passes the replay attack verification. For function implementation of the determining module 730, refer to related descriptions in S203.

In a specific implementation, the attack verification information includes the first timestamp, and the first condition includes that a time difference between a second timestamp and the first timestamp is less than or equal to a first threshold.

In a specific implementation, the attack verification information includes the first random number, and the first condition includes that the first random number and a first random number list meet a matching rule.

In a specific implementation, the matching rule includes that the first random number is in the first random number list.

In a specific implementation, when the matching rule includes that the first random number is in the first random number list, the attack verification information further includes list indication information of the first random number list, and the list indication information is used to determine the first random number list.

In a specific implementation, still refer to FIG. 7. When the matching rule includes that the first random number is in the first random number list, the secure communication apparatus 700 further includes an obtaining module 740, configured to obtain the first random number list from a control device. For function implementation of the obtaining module 740, refer to related descriptions in S203.

In a specific implementation, the matching rule includes that the first random number is not in the first random number list.

In a specific implementation, still refer to FIG. 7. When the matching rule includes that the first random number is in the first random number list, the secure communication apparatus 700 further includes a recording module 750, configured to: when the first packet is not a replay attack packet, record the first random number in the first random number list. For function implementation of the recording module 750, refer to related descriptions in S203.

In a specific implementation, the first packet includes a security header, and the attack verification information is located in the security header.

In a specific implementation, the security header is a service security header.

In a specific implementation, the first packet further includes a UDP header, and a destination port number in the UDP header indicates the service security header.

In a specific implementation, the first device and a third device in the first DC form an MLAG.

In a specific implementation, the second device and a fourth device in the second DC form an MLAG.

In conclusion, according to the secure communication apparatus for DC interconnection provided in this embodiment of this application, the first packet sent by the second device in the second DC to the first device in the first DC carries the attack verification information, and the attack verification information includes at least one of the first timestamp and the first random number. After receiving the first packet, the first device performs replay attack verification on the first packet based on the attack verification information carried in the first packet. In this embodiment of this application, replay protection is performed on a device in a DC by including a timestamp and/or a random number in a packet exchanged between devices in different DCs. This is not only applicable to a point-to-point communication scenario, but also applicable to point-to-multipoint and multipoint-to-point communication scenarios. This helps extend the application scenario of the secure communication solution, and improves flexibility of the secure communication method.

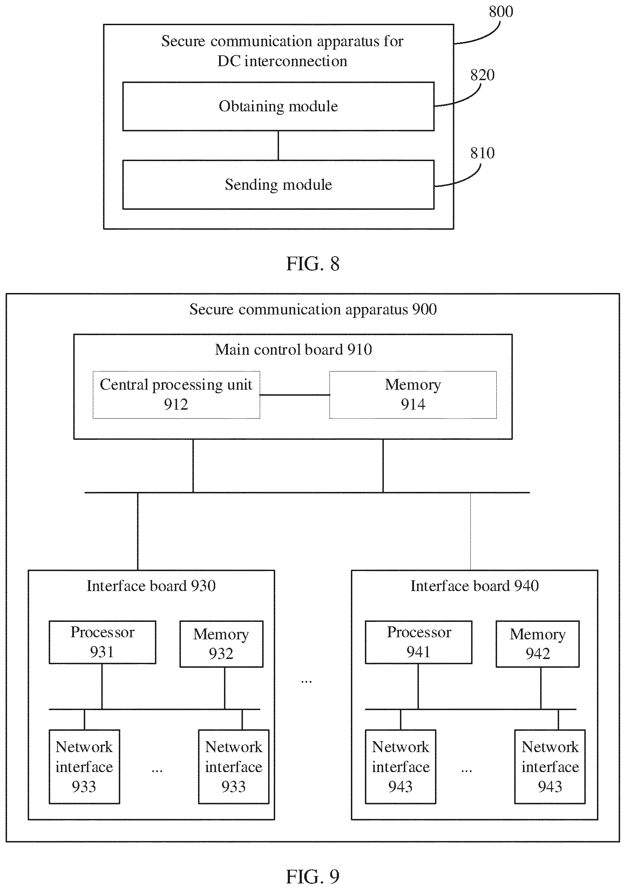

FIG. 8 is a schematic diagram of another structure of a secure communication apparatus 800 for DC interconnection according to an embodiment of this application. The secure communication apparatus 800 is used in a second device in a second DC. For example, the secure communication apparatus 800 is the second device or a function component in the second device. Refer to FIG. 8. The secure communication apparatus 800 may include but is not limited to:
a sending module 810, configured to send a first packet to a first device in a first DC, where the first packet carries attack verification information, and the attack verification information includes at least one of a first timestamp and a first random number; and the attack verification information is used by the first device to perform replay attack verification on the first packet. For function implementation of the sending module 810, refer to related descriptions in S201.

In a specific implementation, the attack verification information includes the first random number, and the first random number is included in a first random number list.

In a specific implementation, the attack verification information further includes list indication information of the first random number list, and the list indication information is used to determine the first random number list.

In a specific implementation, still refer to FIG. 8. The secure communication apparatus 800 further includes an obtaining module 820, configured to obtain the first random number list from a control device.

In a specific implementation, the attack verification information includes the first random number, and the first random number is generated by the second device.

In a specific implementation, the first packet includes a security header, and the attack verification information is located in the security header.

In a specific implementation, the security header is a service security header.

In a specific implementation, the first packet further includes a UDP header, and a destination port number in the UDP header indicates the service security header.

In a specific implementation, the first device and a third device in the first DC form an MLAG.

In a specific implementation, the second device and a fourth device in the second DC form an MLAG.

In conclusion, according to the secure communication apparatus for DC interconnection provided in this embodiment of this application, the first packet sent by the second device in the second DC to the first device in the first DC carries the attack verification information, and the attack verification information includes at least one of the first timestamp and the first random number. After receiving the first packet, the first device performs replay attack verification on the first packet based on the attack verification information carried in the first packet. In this embodiment of this application, replay protection is performed on a device in a DC by including a timestamp and/or a random number in a packet exchanged between devices in different DCs. This is not only applicable to a point-to-point communication scenario, but also applicable to point-to-multipoint and multipoint-to-point communication scenarios. This helps extend the application scenario of the secure communication solution, and improves flexibility of the secure communication method.

It should be understood that the secure communication apparatus for DC interconnection provided in this embodiment of this application may further be implemented by using an application-specific integrated circuit (application-specific integrated circuit, ASIC) or a programmable logic device (programmable logic device, PLD). The PLD may be a complex program logic device (complex programmable logical device, CPLD), a field-programmable gate array (field-programmable gate array, FPGA), generic array logic (generic array logic, GAL), or any combination thereof. Alternatively, the secure communication method for DC interconnection provided in the foregoing method embodiment may be implemented by using software. When the secure communication method for DC interconnection provided in the foregoing method embodiment is implemented by using software, the modules in the secure communication apparatus for DC interconnection each may also be a software module.

FIG. 9 is a schematic diagram of a structure of a secure communication apparatus 900 according to an embodiment of this application. The secure communication apparatus 900 may be the first device or the second device in the foregoing embodiment. As shown in FIG. 9, the secure communication apparatus 900 includes a main control board 910, an interface board 930, and an interface board 940. When there are a plurality of interface boards, a switching board (not shown in FIG. 9) may be included. The switching board is configured to implement data exchange between interface boards (the interface board is also referred to as a line card or a service board).

The main control board 910 is configured to complete functions such as system management, device maintenance, and protocol processing. The interface board 930 and the interface board 940 are configured to provide various service interfaces (for example, a POS interface, a GE interface, and an ATM interface), and forward packets. The main control board 910 mainly includes three types of function units: a system management and control unit, a system clock unit, and a system maintenance unit. The main control board 910, the interface board 930, and the interface board 940 are connected to a system backplane through a system bus to implement interworking. The interface board 930 includes one or more processors 931. The processor 931 is configured to control and manage the interface board 930 and communicate with a central processing unit 912 on the main control board 910. A memory 932 on the interface board 930 is configured to store a random number list, for example, the first random number list described in the foregoing embodiment. If the secure communication apparatus 900 is the second device, the processor 931 determines a first random number in the first random number list and includes the first random number in a first packet, so that the first packet carries the first random number; or the processor 931 generates a first random number and includes the first random number in a first packet, so that the first packet carries the first random number. If the secure communication apparatus 900 is the foregoing first device, the processor 931 performs replay attack verification on the first packet according to a matching rule between the first random number carried in the received first packet and the first random number list. As shown in FIG. 9, the main control board 910 may include a memory 914, and the memory 914 on the main control board 910 may also be configured to store a random number list. This is not limited in this embodiment of this application.

The interface board 930 includes one or more network interfaces 933, configured to receive and send a packet, and the processor 931 performs replay attack verification on the packet based on attack verification information carried in the packet received by the network interface 933. A specific implementation process is not described herein again. Specific functions of the processor 931 are not described one by one herein again either.

It may be understood that, as shown in FIG. 9, in this embodiment, the plurality of interface boards are included, and a distributed forwarding mechanism is used. In this mechanism, operations on the interface board 940 are basically similar to operations on the interface board 930. For brevity, details are not described again. In addition, it may be understood that the processor 931 on the interface board 930 and/or a processor 941 on the interface board 940 in FIG. 9 may be dedicated hardware or a chip, for example, a network processor or an application-specific integrated circuit, to implement the foregoing functions. This implementation is generally referred to as a manner of using dedicated hardware or a chip for processing on a forwarding plane. In another implementation, the processor 931 on the interface board 930 and/or the processor 941 on the interface board 940 may alternatively use a general-purpose processor, for example, a general-purpose central processing unit (central processing unit, CPU), to implement the functions described above.

In addition, it should be noted that there may be one or more main control boards, and when there are a plurality of main control boards, the main control boards may include a primary main control board and a secondary main control board. There may be one or more interface boards. A network device having a stronger data processing capability provides more interface boards. If there are a plurality of interface boards, the plurality of interface boards can communicate with each other by using one or more switching boards, and the plurality of interface boards can jointly implement load balancing and redundancy backup. In a centralized forwarding architecture, the network device may not need the switching board, and the interface board provides a function of processing service data of an entire system. In a distributed forwarding architecture, the network device includes a plurality of interface boards. Data exchange between the plurality of interface boards may be implemented by using a switching board, and the plurality of interface boards can provide a large-capacity data exchange and processing capability. Therefore, a data access and processing capability of a network device in the distributed architecture is greater than that of a device in the centralized architecture. A specific architecture that is to be used depends on a specific networking deployment scenario. This is not limited herein.

In a specific embodiment, the memory 932 may be a read-only memory (read-only memory, ROM) or another type of static storage device that can store static information and instructions, or a random access memory (random access memory, RAM) or another type of dynamic storage device that can store information and instructions. The memory 932 may alternatively be an electrically erasable programmable read-only memory (electrically erasable programmable read-only memory, EEPROM), a compact disc read-only memory (compact disc read-only Memory, CD-ROM) or another compact disc storage, an optical disc storage (including a compact disc, a laser disc, an optical disc, a digital versatile disc, a Blu-ray disc, or the like), a magnetic disk or another magnetic storage device, or any other medium that can be for carrying or storing expected program code in a form of instructions or a data structure and that can be accessed by a computer. However, the memory 932 is not limited thereto. The memory 932 may exist independently, and is connected to the processor 931 through a communication bus. Alternatively, the memory 932 and the processor 931 may be integrated together.

The memory 932 is configured to store program code, and the processor 931 controls execution of the program code, to perform some or all steps of the secure communication method for DC interconnection provided in the foregoing embodiment. The processor 931 is configured to execute the program code stored in the memory 932. The program code may include one or more software modules. The one or more software modules may be the functional modules provided in the embodiment in FIG. 7 or FIG. 8. The memory 914 may also be configured to store program code, and the central processing unit 912 controls execution of the program code, to perform some or all steps of the secure communication method for DC interconnection provided in the foregoing embodiment.

In a specific embodiment, the network interface 933 may be an apparatus that uses any transceiver, and is configured to communicate with another device or a communication network, for example, an Ethernet, a radio access network (radio access network, RAN), or a wireless local area network (wireless local area networks, WLAN).

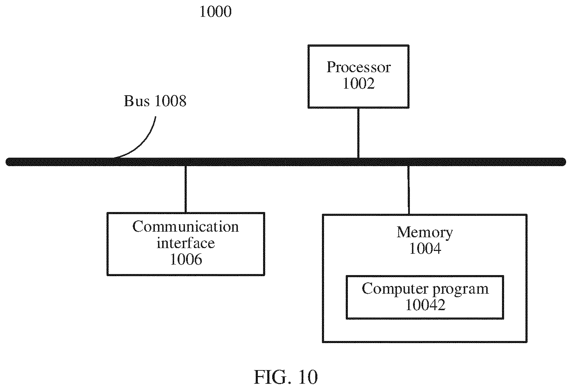

FIG. 10 is a schematic diagram of another structure of a secure communication apparatus 1000 according to an embodiment of this application. The secure communication apparatus 1000 may be the first device or the second device in any one of the foregoing embodiments. Refer to FIG. 10. The secure communication apparatus 1000 includes a processor 1002, a memory 1004, a communication interface 1006, and a bus 1008. The processor 1002, the memory 1004, and the communication interface 1006 are communicatively connected to each other through the bus 1008. The manner of connection between the processor 1002, the memory 1004, and the communication interface 1006 shown in FIG. 10 is merely an example. In an implementation process, the processor 1002, the memory 1004, and the communication interface 1006 may be communicatively connected to each other in a connection manner other than the bus 1008.

The memory 1004 may be configured to store a computer program 10042. The computer program 10042 may include instructions and data. In this embodiment of this application, the memory 1004 may be various types of storage media, for example, a RAM, a ROM, a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, a register, and the like. In addition, the memory 1004 may include a hard disk and/or a memory.

The processor 1002 may be a general-purpose processor. The general-purpose processor may be a processor that reads and executes a computer program (for example, the computer program 10042) stored in a memory (for example, the memory 1004) to perform a specific step and/or operation. In a process of performing the foregoing step and/or operation, the general-purpose processor may use data stored in the memory (for example, the memory 1004). For example, the stored computer program may be executed to implement related functions of the verification module 720, the determining module 730, the obtaining module 740, the recording module 750, and the obtaining module 820. The general-purpose processor may be, for example, but not limited to, a CPU. In addition, the processor 1002 may alternatively be a dedicated processor. The dedicated processor may be a processor specially designed to perform a specific step and/or operation. The dedicated processor may be, for example, but not limited to, a digital signal processor (digital signal processor, DSP), an ASIC, an FPGA, and the like. In addition, the processor 1002 may alternatively be a combination of a plurality of processors, for example, a multi-core processor. The processor 1002 may include at least one circuit, to perform all or some steps of the secure communication method for DC interconnection provided in the foregoing embodiment.

The communication interface 1006 may include an interface that is used to implement component interconnection inside the secure communication apparatus 1000, for example, an input/output (input/output, I/O) interface, a physical interface, or a logical interface, and an interface that is used to implement interconnection between the secure communication apparatus 1000 and another device (for example, a network device). The physical interface may be a gigabit Ethernet interface (gigabit Ethernet, GE), and may be configured to implement interconnection between the secure communication apparatus 1000 and another device. The logical interface is an internal interface of the secure communication apparatus 1000, and may be configured to implement interconnection between components in the secure communication apparatus 1000. It is easy to understand that the communication interface 1006 may be configured to communicate between the secure communication apparatus 1000 and another device. For example, the communication interface 1006 is configured to send and receive a packet between the secure communication apparatus 1000 and the another device, and the communication interface 1006 may implement related functions of the receiving module 710 and the sending module 810. In addition, the communication interface 1006 may further include a transceiver to send and receive a packet. The transceiver may also implement related functions of the receiving module 710 and the sending module 810.

The bus 1008 may be any type of communication bus, for example, a system bus, used to implement interconnection between the processor 1002, the memory 1004, and the communication interface 1006.

The foregoing components may be separately disposed on chips that are independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components.

The secure communication apparatus 1000 shown in FIG. 10 is merely an example. In an implementation process, the secure communication apparatus 1000 may further include other components, which are not enumerated one by one in this specification. The secure communication apparatus 1000 shown in FIG. 10 may perform all or some steps of the secure communication method for DC interconnection provided in the foregoing embodiment, to perform secure communication in a DC interconnection scenario.

An embodiment of this application provides a computer-readable storage medium. The computer-readable storage medium stores a computer program. When the computer program is executed by a processor, all or some of the steps of the secure communication method for DC interconnection provided in the foregoing method embodiment are implemented.

An embodiment of this application provides a computer program product. The computer program product includes a program or code. When the program or the code is run on a computer, the computer is enabled to perform all or some steps of the secure communication method for DC interconnection provided in the foregoing method embodiment.

An embodiment of this application provides a chip. The chip includes a programmable logic circuit and/or program instructions. When the chip runs, the chip is configured to implement all or some of the steps of the secure communication method for DC interconnection provided in the foregoing method embodiment.

An embodiment of this application provides a secure communication system for DC interconnection. The system includes a first device in a first DC and a second device in a second DC. The first device includes the secure communication apparatus 700 for DC interconnection shown in FIG. 7, and the second device includes the secure communication apparatus 900 for DC interconnection shown in FIG. 8. Alternatively, at least one of the first device and the second device is the network device shown in FIG. 9 or FIG. 10.

In a specific implementation, the first device and a third device in the first DC form an MLAG.

In a specific implementation, the second device and a fourth device in the second DC form an MLAG.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage apparatus, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

It should be understood that, in this application, "at least one" means one or more, and "a plurality of" means two or more. "At least two" means two or more. In this application, unless otherwise specified, "/" means "or". For example, A/B may represent A or B. "And/or" in this application describes only an association relationship between associated objects and represents that three relationships may exist. For example, A and/or B may represent the following three cases: Only A exists, both A and B exist, and only B exists. In addition, for ease of clear description, in this application, terms such as "first", "second", and "third" are used to distinguish same items or similar items having basically same functions. A person skilled in the art may understand that the terms such as "first", "second", and "third" do not limit a quantity and an execution sequence.

For different types of embodiments such as the method embodiment and the apparatus embodiment provided in embodiments of this application, refer to each other. This is not limited in embodiments of this application. A sequence of the operations of the method embodiment provided in embodiments of this application can be properly adjusted, and the operations can be correspondingly added or deleted based on a situation. Any modified method that can be easily figured out by a person skilled in the art without departing from a technical scope disclosed in this application shall fall within the protection scope of this application, and therefore details are not described again.

In the corresponding embodiments provided in this application, it should be understood that the disclosed apparatus and the like may be implemented in other composition manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts described as units may or may not be physical units, that is, may be located at one position, or may be distributed on a plurality of network devices (for example, terminal devices). Some or all of the units may be selected based on actual requirements to achieve the objectives of the solutions of embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A secure communication method for data center DC interconnection, wherein the method comprises:
receiving, by a first device in a first DC, a first packet sent by a second device in a second DC, wherein the first packet carries attack verification information, and the attack verification information comprises at least one of a first timestamp and a first random number; and
performing, by the first device, replay attack verification on the first packet based on the attack verification information.

2. The method according to claim 1, wherein the method further comprises:
when a first condition is met, determining, by the first device, that the first packet passes the replay attack verification.

3. The method according to claim 2, wherein
the attack verification information comprises the first timestamp, and the first condition comprises that a time difference between a second timestamp and the first timestamp is less than or equal to a first threshold.

4. The method according to claim 2 or 3, wherein
the attack verification information comprises the first random number, and the first condition comprises that the first random number and a first random number list meet a matching rule.

5. The method according to claim 4, wherein
the matching rule comprises that the first random number is in the first random number list.

6. The method according to claim 4 or 5, wherein
the attack verification information further comprises list indication information of the first random number list, and the list indication information is used to determine the first random number list.

7. The method according to any one of claims 4 to 6, wherein the method further comprises:
obtaining, by the first device, the first random number list from a control device.

8. The method according to claim 4, wherein
the matching rule comprises that the first random number is not in the first random number list.

9. The method according to claim 8, wherein the method further comprises:
when the first packet is not a replay attack packet, recording, by the first device, the first random number in the first random number list.

10. The method according to any one of claims 1 to 9, wherein
the first packet comprises a security header, and the attack verification information is located in the security header.

11. The method according to claim 10, wherein
the security header is a service security header.

12. The method according to claim 11, wherein
the first packet further comprises a user datagram protocol UDP header, and a destination port number in the UDP header indicates the service security header.

13. The method according to any one of claims 1 to 12, wherein
the first device and a third device in the first DC form a multi-chassis link aggregation group MLAG.

14. The method according to any one of claims 1 to 13, wherein
the second device and a fourth device in the second DC form an MLAG.

15. A secure communication method for data center DC interconnection, wherein the method comprises:
sending, by a second device in a second DC, a first packet to a first device in a first DC, wherein the first packet carries attack verification information, and the attack verification information comprises at least one of a first timestamp and a first random number, wherein
the attack verification information is used by the first device to perform replay attack verification on the first packet.

16. The method according to claim 15, wherein
the attack verification information comprises the first random number, and the first random number is comprised in a first random number list.

17. The method according to claim 16, wherein
the attack verification information further comprises list indication information of the first random number list, and the list indication information is used to determine the first random number list.

18. The method according to claim 16 or 17, wherein the method further comprises:
obtaining, by the second device, the first random number list from a control device.

19. The method according to claim 15, wherein
the attack verification information comprises the first random number, and the first random number is generated by the second device.

20. The method according to any one of claims 15 to 19, wherein
the first packet comprises a security header, and the attack verification information is located in the security header.

21. The method according to claim 20, wherein
the security header is a service security header.

22. The method according to claim 21, wherein
the first packet further comprises a user datagram protocol UDP header, and a destination port number in the UDP header indicates the service security header.

23. The method according to any one of claims 15 to 22, wherein
the first device and a third device in the first DC form a multi-chassis link aggregation group MLAG.

24. The method according to any one of claims 15 to 23, wherein
the second device and a fourth device in the second DC form an MLAG.

25. A secure communication apparatus for data center DC interconnection, used in a first device in a first DC, wherein the apparatus comprises:
a receiving module, configured to receive a first packet sent by a second device in a second DC, wherein the first packet carries attack verification information, and the attack verification information comprises at least one of a first timestamp and a first random number; and
a verification module, configured to perform replay attack verification on the first packet based on the attack verification information.

26. The apparatus according to claim 25, wherein the apparatus further comprises:
a determining module, configured to: when a first condition is met, determine that the first packet passes the replay attack verification.

27. The apparatus according to claim 26, wherein
the attack verification information comprises the first timestamp, and the first condition comprises that a time difference between a second timestamp and the first timestamp is less than or equal to a first threshold.

28. The apparatus according to claim 26 or 27, wherein
the attack verification information comprises the first random number, and the first condition comprises that the first random number and a first random number list meet a matching rule.

29. The apparatus according to claim 28, wherein
the matching rule comprises that the first random number is in the first random number list.

30. The apparatus according to claim 28 or 29, wherein
the attack verification information further comprises list indication information of the first random number list, and the list indication information is used to determine the first random number list.

31. The apparatus according to any one of claims 28 to 30, wherein the apparatus further comprises:
an obtaining module, configured to obtain the first random number list from a control device.

32. The apparatus according to claim 28, wherein
the matching rule comprises that the first random number is not in the first random number list.

33. The apparatus according to claim 32, wherein the apparatus further comprises:
a recording module, configured to: when the first packet is not a replay attack packet, record the first random number in the first random number list.

34. The apparatus according to any one of claims 25 to 33, wherein
the first packet comprises a security header, and the attack verification information is located in the security header.

35. The apparatus according to claim 34, wherein
the security header is a service security header.

36. The apparatus according to claim 35, wherein
the first packet further comprises a user datagram protocol UDP header, and a destination port number in the UDP header indicates the service security header.

37. The apparatus according to any one of claims 25 to 36, wherein
the first device and a third device in the first DC form a multi-chassis link aggregation group MLAG.

38. The apparatus according to any one of claims 25 to 37, wherein
the second device and a fourth device in the second DC form an MLAG.

39. A secure communication apparatus for data center DC interconnection, used in a second device in a second DC, wherein the apparatus comprises:
a sending module, configured to send a first packet to a first device in a first DC, wherein the first packet carries attack verification information, and the attack verification information comprises at least one of a first timestamp and a first random number, wherein
the attack verification information is used by the first device to perform replay attack verification on the first packet.

40. The apparatus according to claim 39, wherein
the attack verification information comprises the first random number, and the first random number is comprised in a first random number list.

41. The apparatus according to claim 40, wherein
the attack verification information further comprises list indication information of the first random number list, and the list indication information is used to determine the first random number list.

42. The apparatus according to claim 40 or 41, wherein the apparatus further comprises:
an obtaining module, configured to obtain the first random number list from a control device.

43. The apparatus according to claim 39, wherein
the attack verification information comprises the first random number, and the first random number is generated by the second device.

44. The apparatus according to any one of claims 39 to 43, wherein
the first packet comprises a security header, and the attack verification information is located in the security header.

45. The apparatus according to claim 44, wherein
the security header is a service security header.

46. The apparatus according to claim 45, wherein
the first packet further comprises a user datagram protocol UDP header, and a destination port number in the UDP header indicates the service security header.

47. The apparatus according to any one of claims 39 to 46, wherein
the first device and a third device in the first DC form a multi-chassis link aggregation group MLAG.

48. The apparatus according to any one of claims 39 to 47, wherein
the second device and a fourth device in the second DC form an MLAG.

49. A secure communication apparatus, comprising a memory and a processor, wherein
the memory is configured to store a computer program; and
the processor is configured to execute the computer program stored in the memory, so that the secure communication apparatus performs the method according to any one of claims 1 to 14 or performs the method according to any one of claims 15 to 24.

50. A computer-readable storage medium, wherein the computer-readable storage medium stores a computer program; and when the computer program is executed by a processor, the method according to any one of claims 1 to 14 or the method according to any one of claims 15 to 24 is implemented.

51. A computer program product, wherein the computer program product comprises a program or code; and when the program or the code is run on a processor, the method according to any one of claims 1 to 14 or the method according to any one of claims 15 to 24 is implemented.

52. A secure communication system for data center DC interconnection, wherein the system comprises a first device in a first DC and a second device in a second DC; and
the first device comprises the apparatus according to any one of claims 25 to 38, and the second device comprises the apparatus according to any one of claims 39 to 48; or
at least one of the first device and the second device comprises the apparatus according to claim 49.
